(19) Europäisches Patentamt
European Patent Office
Office européen des brevets

(11) Veröffentlichungsnummer: **0 055 401**
**B1**

# (12) EUROPÄISCHE PATENTSCHRIFT

(45) Veröffentlichungstag der Patentschrift: **17.04.85**

(51) Int. Cl.⁴: **A 01 N 25/30**, A 01 N 25/04

(21) Anmeldenummer: **81110206.0**

(22) Anmeldetag: **07.12.81**

## (54) Insektizide und akarizide Mittel und ihre Verwendung.

(30) Priorität: **19.12.80 DE 3048021**

(43) Veröffentlichungstag der Anmeldung: **07.07.82 Patentblatt 82/27**

(45) Bekanntmachung des Hinweises auf die Patenterteilung: **17.04.85 Patentblatt 85/16**

(84) Benannte Vertragsstaaten: **CH DE FR GB IT LI**

(56) Entgegenhaltungen:
**CH - A - 275 705**
**DE - A - 2 041 480**
**DE - B - 1 121 814**
**DE - C - 824 949**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Nonn, Konrad, Dr., Otto-Stange-Strasse 17, D-5090 Leverkusen 1 (DE)**
Erfinder: **Wolf, Karlheinz, Dr., Paul-Klee-Strasse 77, D-5090 Leverkusen 1 (DE)**
Erfinder: **Haas, Johannes, Im Bend 11, D-4048 Grevenbroich (DE)**
Erfinder: **Paulat, Volker, Dr., Menzelweg 1, D-4019 Monheim (DE)**

EP 0 055 401 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung sind insektizide und akarizide Mittel, die als wasserunlösliche bzw praktisch wasserunlösliche Wirkstoffe Cyclopropancarbonsäure- und Isopropylphenylessigsäure-ester und wasserlösliche Oxalkylierungsprodukte von Verbindungen, die durch Anlagerung von Styrolen an Phenole oder Naphthole hergestellt werden, enthalten, und beim Verdünnen mit Wasser kolloidale Lösungen bilden, sowie ihre Verwendung.

Als Styrol kommt bevorzugt gegebenenfalls alkyliertes Styrol und insbesondere eine Verbindung der Formel

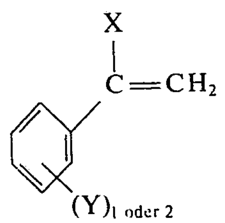

(I)

in Frage, worin

X für Wasserstoff oder Methyl und
Y für Wasserstoff oder $C_1-C_4$-Alkyl stehen.

Als Beispiele seien Styrol, Vinyltoluol und $\alpha$-Methylstyrol genannt.

Bevorzugte Phenole besitzen die Formel

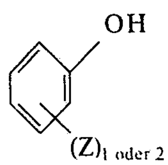

(II)

worin

Z für Wasserstoff, $C_1-C_4$-Alkyl oder Phenyl steht.

Davon sind Phenol und die isomeren Kresole, Xylenole und Oxidiphenyle besonders geeignet.

Bevorzugte Naphthole sind neben $\alpha$- und $\beta$-Naphthol ihre Homologen mit 1 oder 2 Methylgruppen.

Die Herstellung der Anlagerungsprodukte erfolgt in bekannter Weise zweckmäßig in Gegenwart von Katalysatoren, wie Schwefelsäure, p-Toluolsulfonsäure oder Zinkchlorid. Die Anlagerungsprodukte können als einheitliche Substanzen der Oxalkylierung unterworfen werden, jedoch kann man auch Gemische verwenden, wie sie bei der Herstellung im allgemeinen zunächst anfallen.

Die Oxalkylierungsprodukte sind bekannt. Sie können in an sich bekannter Weise, z. B. nach der DE-AS 1 121 814, hergestellt werden.

Bevorzugte Oxalkylierungsprodukte sind solche, die durch Umsetzung von Anlagerungsprodukten aus 1 bis 3 Mol Styrol oder Vinyltoluol und 1 Mol Phenol mit 8—50 Mol Ethylenoxid oder Propylenoxid erhalten werden.

Ganz besonders bevorzugt sind Verbindungen der Formel

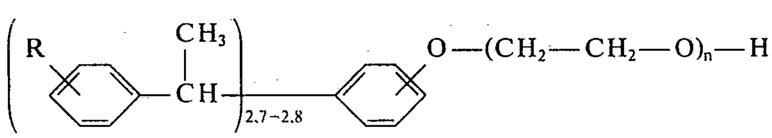

(III)

wobei

R Wasserstoff oder Methyl und
n eine Zahl 12—30 bedeuten.

Als wasserunlösliche bzw. praktisch wasserunlösliche Cyclopropancarbonsäure- und Isopropylphenylessigsäure-ester seien insbesondere die Benzyl- und Phenoxybenzylester genannt, die z. B. in den deutschen Offenlegungsschriften 2 709 264, 2 730 515, 2 840 992 und 2 923 217 beschrieben wer-den.

Die erfindungsgemäßen Mittel können weitere Zusatzstoffe wie Mittel zur Herabsetzung der Visko-

sität, beispielsweise Formamid, Glykol, Glykolether und Wasser, und/oder Mittel zur Kennzeichnung, beispielsweise Farbstoffe und/oder Mittel zur Verminderung der Schaumbildung bei der Verwendung als Spritzmittel, beispielsweise Tri-n-butylphosphat enthalten.

Bevorzugte Mittel enthalten 0,1—40%, vorzugsweise 1—20%, Insektizid oder Akarizid, 0,2—90%, vorzugsweise 2—40%, erfindungsgemäße Oxalkylierungsprodukte, 0—90%, vorzugsweise 20—70%, Mittel zur Viskositätserniedrigung, 0—2% Mittel zur Kennzeichnung und/oder 0—5% Entschäumer.

Aufgrund der sehr hohen Wirksamkeit der Insektizide und Akarizide werden diese in sehr starker Verdünnung angewandt. Zur 100%igen Abtötung zahlreicher Insekten reichen häufig Wirkstoffkonzentrationen in Wasser von weniger als 100 ppm aus. Um dem Anwender eine genaue Dosierung zu erleichtern, ist es häufig sinnvoll, das erfindungsgemäße Mittel nur mit 0,5—5% Wirkstoffgehalt einzustellen und nicht die maximal mögliche Wirkstoffkonzentration zu wählen.

Bekannt sind insektizide und akarizide Mittel, die die genannten wasserunlöslichen bzw. praktisch wasserunlöslichen Wirkstoffe, nichtionogene Emulgatoren und andere Zusatzstoffe enthalten. Als nichtionogene Emulgatoren werden in den deutschen Offenlegungsschriften 2 709 264, 2 840 992 und 2 923 217 genannt:

Fettsäurepolyglykolester, Fettalkoholpolyglykolether, Alkylarylpolyglykolether, Alkylphenolpolyglykolether. Verdünnt man diese bekannten Konzentrate mit Wasser, beispielsweise zur Spritzbrühe oder zur mottenfesten Ausrüstung wollhaltiger Textilien, so erhält man trübe Emulsionen. In Ruhe entmischen sich diese Emulsionen, so daß zum Erhalt der gleichmäßigen Verteilung des Wirkstoffes in Wasser Rühren oder Schütteln erforderlich ist.

Es wurde nun gefunden, daß die erfindungsgemäßen Mittel, wenn bezogen auf den Wirkstoffgehalt eine Mindestmenge des oxalkylierten Anlagerungsproduktes vorhanden ist, beim Verdünnen mit Wasser in beliebigem Verhältnis eine kolloidale Lösung ergeben. Die Definition einer kolloidalen Lösung wird beispielsweise von A. F. Holleman und E. Wiberg in »Lehrbuch der anorganischen Chemie«, 71.—80. Auflage (1971), S. 505, 506, gegeben. Die Mindestmenge an oxalkyliertem Anlagerungsprodukt kann durch einfache Vorversuche leicht ermittelt werden. Üblicherweise ist auf 1 Gew.-Teil Wirkstoff mindestens 1 Gew.-Teil Oxalkylierungsprodukt erforderlich. Prinzipiell besteht für das Gew.-Verhältnis Wirkstoff zu Tensid keine obere Grenze. Es ist technisch sinnvoll, das Verhältnis 1 : 20 nicht zu überschreiten. Bei Verwendung der besonders bevorzugten Verbindung der Formel (III) sind bezogen auf 1 Gew.-Teil Wirkstoff aus der Reihe der Cyclopropancarbonsäure- und Isopropylphenylessigsäurephenoxybenzylester etwa 1,5 bis 3,5 Gew.-Teile des Tensids der Formel (III) technisch besonders vorteilhaft.

Unter dem Lichtmikroskop können keine Tröpfchen des wasserunlöslichen Wirkstoffes beobachtet werden. Auch bei Verwendung von polarisiertem Licht erscheint die Verdünnung des erfindungsgemäßen Konzentrats mit Wasser unter dem Lichtmikroskop als klare Lösung. Werden diese Lösungen mit einem Laser durchstrahlt, so ist ein Streueffekt wie bei mizellaren Lösungen zu beobachten (vgl. H. Sonntag, Lehrbuch der Kolloidwissenschaft, VEB Deutscher Verlag der Wissenschaften, Berlin, 1977; S. 257 ff.). Die Tenside liegen in diesen Lösungen in Form von Mizellen vor, in denen die Wirkstoffe solubilisiert sind. Durch Laserstreulichtmessungen und deren Auswertung mit Hilfe der Autokorrelationsspektroskopie läßt sich die Größe der Mizellen bestimmen.

Wird das Solubilizierungsvermögen der Mizellen durch Zugabe von gelöstem Wirkstoff überschritten, so wird eine Trübung und das Auftreten von Emulsionstropfen beobachtet.

## Beispiel 1

In 419 Gew.-Teile eines ι-Tolylethylphenol-Gemisches, das durch Umsetzung von 325 Gew.-Teilen p-Methylstyrol mit 94 Gew.-Teilen Phenol in Gegenwart von Schwefelsäure als Katalysator erhalten wurde, werden bei 130°C in Gegenwart von 4 Gew.-Teilen Kaliumhydroxid 660 Gew.-Teile Ethylenoxid eingeleitet. Das erhaltene hochviskose Öl ist ein Gemisch zahlreicher Substanzen, deren durchschnittliche Zusammensetzung der Formel (III) entspricht, wobei für R Methyl und für n die Zahl 15 steht.

## Beispiel 2

Analog Beispiel 1 erhält man durch Einleiten von 1320 Gew.-Teilen Ethylenoxid ein Substanzgemisch, dessen durchschnittliche Zusammensetzung der Formel (III) entspricht, wobei für R Methyl und für n die Zahl 30 steht.

## Beispiel 3

100 Gew.-Teile 3-(2,2-Dichlorvinyl)-2,2-dimethyl-cyclopropancarbonsäure-(4-fluor-3-phenoxy-benzyl)-ester und 250 Gew.-Teile des in Beispiel 1 beschriebenen Oxalkylierungsproduktes werden in 650 Gew.-Teilen Diethylenglykolmonoethylether gelöst.

Verteilt man 1 Gew.-Teil dieser Lösung in 50 Gew.-Teilen Wasser, so erhält man eine klare Lösung. Durch Laserstreulichtmessung ($\lambda$=568 nm, bei 90° Streuwinkel) und deren Auswertung mit Hilfe der Autokorrelationsspektroskopie ergibt sich ein mittlerer Durchmesser für die Mizellen von 13 nm.

## Beispiel 4

100 Gew.-Teile 3-(2,2-Dichlorvinyl)-2,2-dimethyl-cyclopropancarbonsäure-2,3,4,5,6-pentafluorbenzylester und 500 Gew.-Teile des in Beispiel 2 beschriebenen Oxalkylierungsproduktes werden in 400 Gew.-Teilen Dimethylformamid gelöst.

Rührt man 1 Gew.-Teil dieser Lösung in 50 Gew.-Teile Wasser ein, so erhält man eine klare Lösung Die Laserstreulichtmessung entsprechend Beispiel 3 ergibt Mizellen mit dem mittleren Durchmesser von 22 nm.

## Beispiel 5

100 Gew.-Teile 2-Isopropyl-4-trifluormethoxyphenylessigsäure-α'-cyan-4'-fluor-3'-phenoxy-benzylester und 200 Gew.-Teile des in Beispiel 1 beschriebenen Oxalkylierungsproduktes werden in 500 Gew.-Teilen Ethylenglykol und 200 Gew.-Teilen Wasser gelöst.

Rührt man 1 Gew.-Teil dieser Lösung in 50 Gew.-Teile Wasser ein, so erhält man eine klare Lösung. Durch Laserlichtstreumessung ergibt sich ein mittlerer Durchmesser für die Mizellen von 13 nm.

## Beispiel 6

300 Gew.-Teile 2,2-Dimethyl-3-(2,2-dichlorvinyl)-cyclopropancarbonsäure-α-cyan-3-phenoxy-4-fluor-benzylester und 600 Gew.-Teile des in Beispiel 1 beschriebenen Oxalkylierungsproduktes werden unter Zusatz von 100 Gew.-Teilen Diethylenglykolmonoethylether vermischt. Rührt man 1 Gew.-Teil dieser viskosen Mischung in 100 Gew.-Teile Wasser ein, so wird eine klare Lösung erhalten. Diese Lösung enthält aufgrund der Laserlichtstreumessung Mizellen mit einem mittleren Durchmesser von 13 nm.

## Beispiel 7

10 Gew.-Teile des Carbonsäurebenzylesters aus Beispiel 6 werden mit 30 Gew.-Teilen des in Beispiel 1 beschriebenen Oxalkylierungsproduktes vermischt und unter Rühren portionsweise mit insgesamt 960 Gew.-Teilen Wasser versetzt. Nach dreistündigem Rühren wird eine klare Lösung erhalten, die bei Verdünnung mit beliebigen Wassermengen klar bleibt.

## Beispiel 8

In ein Färbebad, das pro Liter Wasser

| | |
|---|---|
| 2 g | Acid Red 249 (C.I. Nr. 18 134), |
| 10 g | Natriumsulfat, |
| 3 g | Essigsäure und |
| 1 g | der in Beispiel 7 beschriebenen Lösung |

enthält, wird bei 40°C Wollgarn im Flottenverhältnis 1 : 10 eingebracht. Anschließend wird auf 100°C erhitzt und die Färbung auf übliche Weise fertiggestellt. Die erhaltene, rotgefärbte Wolle besitzt einen guten Schutz gegen Motten- und Käferfraß. Dieser Schutz besteht auch noch nach wiederholten Wäschen der Wolle.

## Beispiel 9

In ein Färbebad, das pro Liter Wasser

| | |
|---|---|
| 2 g | Acid Orange 33 (C.I. Nr. 24 780) |
| 3 g | Ammoniumsulfat |
| 1 g | Essigsäure |
| 1,5 g | eines Kondensationsproduktes aus Phenolsulfonsäure, Di-(hydroxyphenyl)-sulfon und |

Formaldehyd
2 g eines Kondensationsproduktes aus Naphthalinsulfonsäure und Formaldehyd
1 g der in Beispiel 7 beschriebenen Lösung

enthält, wird bei 40°C ein Mischgarn, bestehend aus 80% Wolle/20% Polyamid, im Flottenverhältnis 1 : 10 eingebracht. Anschließend wird auf 100°C erhitzt und die Färbung auf übliche Weise fertiggestellt. Der orangegefärbte Wollanteil in dem so behandelten Mischgarn besitzt einen guten Schutz gegen Motten- und Käferfraß. Dieser Schutz ist auch nach wiederholter Wäsche beständig.

Beispiel 10

In ein Färbebad, das pro Liter Wasser

3 g Disperse Blue 56 (C.I. Nr. 63 285)
1,5 g eines blauen Farbstoffs der Formel

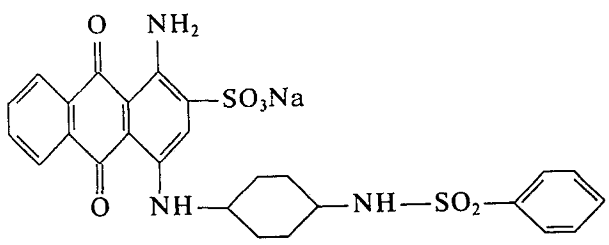

(IV)

1 g Essigsäure
2 g eines Kondensationsproduktes aus Naphthalinsulfonsäure und Formaldehyd
3 g einer Mischung aus Kresotinsäuremethylester und einem Anlagerungsprodukt von 30 Mol Ethylenoxid an Ricinusöl
0,45 g der in Beispiel 7 beschriebenen Lösung

enthält, wird bei 40°C ein Mischgarn, bestehend aus 45% Wolle/55% Polyester, im Flottenverhältnis 1 : 10 eingebracht. Anschließend wird auf 100°C erhitzt und die Färbung auf übliche Weise fertiggestellt. Der blaugefärbte Wollanteil in dem so behandelten Ton-in-Ton gefärbten Mischgarn besitzt einen guten Schutz gegen Motten- und Käferfraß. Dieser Schutz ist auch nach wiederholter Wäsche beständig.

Beispiel 11

Rohwolle wird nach dem Kontinue-Waschprozeß in einem Leviathan gewaschen und mottenecht ausgerüstet. Dazu wird im letzten Bottich des Leviathans die Flotte mit Essigsäure auf einen pH-Wert unterhalb 7 eingestellt. Dazu werden pro Liter Wasser

1 g der in Beispiel 7 beschriebenen Lösung

gegeben. Die Behandlung erfolgt bei 40—60°C.

Zur Aufrechterhaltung der Konzentration im Behandlungsbad erfolgt ein Nachsatz von

10 g der in Beispiel 7 beschriebenen Lösung

pro kg Warengewicht der Rohwolle. Dieser Nachsatz wird als wäßrige Lösung während der gesamten Behandlungszeit dem Bad kontinuierlich zugegeben. Die so behandelte Rohwolle besitzt einen guten Schutz gegen Motten- und Käferfraß. Sie kann ohne Beeinträchtigung ihrer technologischen Eigenschaften allen in der Textilindustrie üblichen Weiterverarbeitungsprozessen zugeführt werden.

**Patentansprüche**

1. Insektizide und akarizide Mittel, die beim Verdünnen mit Wasser kolloidale Lösungen bilden, gekennzeichnet durch einen Gehalt an einem wasserunlöslichen bzw. praktisch wasserunlöslichen Wirkstoff aus der Gruppe Cyclopropancarbonsäure- oder Isopropylphenylessigsäure-ester und einem wasserlöslichen Oxalkylierungsprodukt einer Verbindung, die durch Anlagerung von Styrolen an Phenole oder Naphthole erhalten wird.

2. Mittel nach Anspruch 1, dadurch gekennzeichnet, daß sie ein Oxalkylierungsprodukt enthalten, das durch Umsetzung von Anlagerungsprodukten aus 1—3 Mol Styrol oder Vinyltoluol und 1 Mol Phenol mit 8—50 Mol Ethylenoxid oder Propylenoxid erhalten wird.

3. Mittel nach Anspruch 1, dadurch gekennzeichnet, daß sie den Wirkstoff und das Oxalkylierungs produkt im Gewichtsverhältnis 1 : 1—20 enthalten.

4. Mittel nach Anspruch 1, dadurch gekennzeichnet, daß sie 0,1—40 Gew.-% des Wirkstoffs, 0,2—90 Gew.-% des Oxalkylierungsproduktes, 0—90 Gew.-% eines Mittels zur Viskositätserniedrigung, 0—2 Gew.-% eines Mittels zur Kennzeichnung und/oder 0—5 Gew.-% eines Entschäumers enthalten.

5. Verfahren zur Bekämpfung von Insekten und Akariden, dadurch gekennzeichnet, daß man Mittel des Anspruchs 1 verwendet.

## Claims

1. Insecticidal and acaricidal agents which form colloidal solutions when diluted with water, charac terised in that they contain a water-insoluble or virtually water-insoluble active compound from the group comprising cyclopropanecarboxylic acid esters and isopropylphenylacetic acid esters and a water-soluble oxyalkylation product of a compound which is obtained by the addition of styrenes onto phenols or naphthols.

2. Agents according to Claim 1, characterised in that they contain an oxyalkylation product which is obtained by the reaction of addition products of 1—3 mols of styrene or vinyltoluene and 1 mol of phenol with 8—50 mols of ethylene oxide or propylene oxide.

3. Agents according to Claim 1, characterised in that they contain the active compound and the oxyalkylation product in a weight ratio of 1 : 1—20.

4. Agents according to Claim 1, characterised in that they contain 0.1—40% by weight of the active compound, 0.2—90% by weight of the oxyalkylation product, 0—90% by weight of an agent for reducing the viscosity, 0—2% by weight of a characterising agent and/or 0—5% by weight of an anti-foaming agent.

5. Process for combating insects and acarids, characterised in that agents of Claim 1 are used.

## Revendications

1. Compositions insecticides et acaricides, qui forment des solutions colloïdales par dilution avec l'eau, caractérisées par une teneur en une substance active insoluble ou pratiquement insoluble dans l'eau, choisie dans le groupe comprenant des esters d'acide cyclopropanecarboxylique ou d'acide isopropylphénylacétique et en un produit hydrosoluble d'oxalkylation d'un composé qui est obtenu par addition de styrènes sur des phénols ou des naphtols.

2. Compositions suivant la revendication 1, caractérisées en ce qu'elles contiennent un produit d'oxalkylation qui est obtenu par réaction de produits d'addition de 1 à 3 moles de styrène ou de vinyltoluène et d'une mole de phénol avec 8 à 50 moles d'oxyde d'éthylène ou d'oxyde de propylène.

3. Compositions suivant la revendication 1, caractérisées en ce qu'elles contiennent la substance active et le produit d'oxalkylation dans le rapport en poids de 1 : 1—20.

4. Compositions suivant la revendication 1, caractérisées en ce qu'elles contiennent 0,1 à 40% en poids de substance active, 0,2 à 90% en poids du produit d'oxalkylation, 0 à 90% en poids d'un agent abaissant la viscosité, 0—2% en poids d'un agent de caractérisation et/ou 0—5% en poids d'un agent antimoussant.

5. Procédé pour combattre des insectes et des acariens, caractérisé en ce qu'on utilise des compositions de la revendication 1.